# EUROPEAN PATENT SPECIFICATION

(11) **EP 1 961 577 B1**
(45) Date of publication and mention of the grant of the patent: **25.07.2012**
(21) Application number: 08101566.1
(22) Date of filing: 13.02.2008
(51) Int. Cl.: B41M 3/10, B41M 3/14

(54) **Substrate fluorescende mask and creation method**
Substratfluoreszenz-Maske und Herstellungsverfahren
Masque à fluorescence de substrat et procédé de création

(30) Priority: 20.02.2007 US 708313
(43) Date of publication of application: 27.08.2008
(73) Proprietor: Xerox Corporation, Rochester, New York 14644 (US)
(72) Inventor: Bala, Raja, Webster, NY 14580 (US); Eschbach, Reiner, Webster, NY 14580 (US)
(74) Representative: Skone James, Robert Edmund

(56) References cited:
- WO-A-03/044278
- WO-A-2006/027418
- US-A1- 2004 233 465

## Description

This invention relates generally to methods and systems for steganographically embedding information, and more particularly to a system and method for utilizing a multiple color overlay in a substrate fluorescence mask to embed information in documents and/or images.

Current counterfeit prevention systems are mainly based on the use of digital watermarks, a technique which permits the insertion of information (e.g., copyright notices, security codes, identification data, etc.) to digital image signals and documents. Such data can be in a group of bits describing information pertaining to the signal or to the author of the signal (e.g., name, place, etc.). Most common watermarking methods for images work in spatial or frequency domains, with various spatial and frequency domain techniques used for adding watermarks to and removing them from signals.

For spatial digital watermarking the simplest method involves flipping the lowest-order bit of chosen pixels in a gray scale or color image. This works well only if the image will not be subject to any human or noisy modification. A more robust watermark can be embedded in an image in the same way that a watermark is added to paper. Such techniques may superimpose a watermark symbol over an area of the picture and then add some fixed intensity value for the watermark to the varied pixel values of the image. The resulting watermark may be visible or invisible depending upon the value (large or small, respectively) of the watermark intensity.

Spatial watermarking can also be applied using color separation. In this approach, the watermark appears in only one of the color bands. This type of watermark is visibly subtle and difficult to detect under normal viewing conditions. However, when the colors of the image are separated for printing or xerography, the watermark appears immediately. This renders the document useless to the printer unless the watermark can be removed from the color band. This approach is used commercially for journalists to inspect digital pictures from a stock photo agency before buying un-watermarked versions.

Alternatively, another approach uses ultra-violet (UV) ink rendering to encode a watermark that is not visible under normal illumination, but revealed under UV illumination. The traditional approach, often used in currency notes, is to render a watermark with special ultra-violet (UV) fluorescent inks and to subsequently identify the presence or absence of the watermark in a proffered document using a standard UV lamp.. However, these inks are costly to employ, and thus are typically only economically viable in offset printing scenarios, and thus only truly avail themselves of long print runs. Additionally, these materials are often difficult to incorporate into standard electro-photographic or other non-impact printing systems like solid ink printers, either due to cost, availability or physical/chemical properties. This in turn discourages their use in variable data printing arrangements, such as for redeemable coupons, for example.

There is well established understanding in the printing industry regarding the utilization of fluorescent material inks in combination with ultra-violet light sources as employed for security marks, particularly as a technique to deter counterfeiting. However, there remains a long standing need for an approach to such a technique which will provide the same benefit but with lower complexity and cost, particularly in a digital printing environment, using only common consumables.

Known digital watermark methods are disclosed in US-A-2005/0078851, US-A-2003/0005304, US-B-6,373,965 and US-B-7,127,112. Prior art relevant to the background of the invention is also set out in US-A-2004/233465, WO-A-2006/027418 and WO-A-2003/044278.

Aspects of the present invention are set out in appended claims 1, 6, 7 and 10. The disclosed embodiments provide examples of improved solutions to the problems noted in the above Background discussion and the art cited therein. There is shown in these examples an improved method for creation of a substrate fluorescence mask having background color(s), UV mark color(s), and distraction color(s), to be printed as an image on a substrate containing optical brightening agents. The method includes selecting one or more UV mark colors for the mask such that the UV mark colors exhibit low contrast against the background color(s) under normal illumination and high contrast against the background color(s) under UV illumination. One or more distraction colors are also selected, such that the distraction color(s) exhibit low contrast against the background color(s) under UV illumination and exhibit high contrast against the background color(s) under normal illumination. A distraction pattern, formed from one or more distraction colors, is also selected.

In an alternate embodiment there is disclosed a system for creation of a substrate fluorescence mask to be printed as an image on a substrate for the purpose of embedding information in printed documents. The substrate fluorescence mask includes at least one background color, at least one UV mark color, and at least one distraction color. The system includes a digital printing device for printing the fluorescence mask image on a substrate containing optical brightening agents. The one or more UV mark colors are selected to exhibit low contrast against the background color(s) under normal illumination and high contrast against the background color(s) under UV illumination. The distraction color is chosen to exhibit low contrast against the background color(s) under UV illumination and exhibit high contrast against the background color(s) under normal illumination. One or more distraction patterns are formed from at least one distraction color.

In another embodiment there is disclosed a substrate fluorescence mask which includes at least one background color, at least one UV mark color, and at least one distraction color. The UV mark color is specified to exhibit low contrast against the background color under normal illumination and high contrast against the background color under UV illumination. The distraction color is specified to exhibit low contrast against the background color under UV illumination and exhibit high contrast against the background color under normal illumination. One or more distraction patterns is also specified, with the distraction pattern formed from at least one distraction color.

In yet another embodiment there is disclosed a computer-readable storage medium having computer readable program code embodied in the medium which, when the program code is executed by a computer, causes the computer to perform method steps for creation of a substrate fluorescence mask having one or more background color(s), one or more UV mark color(s), and one or more distraction color(s), to be printed as an image on a substrate containing optical brightening agents. The method includes selecting background color(s) and also selecting UV mark color(s) for the mask such that the UV mark color(s) exhibits low contrast against the background color(s) under normal illumination and high contrast against the background color(s) under UV illumination. At least one distraction color is also selected, such that the distraction color exhibits low contrast against the background color(s) under UV illumination and exhibits high contrast against the background color(s) under normal illumination. One or more distraction patterns, formed from distraction color(s), is also selected.

The foregoing and other features of the embodiments described herein will be apparent and easily understood from a further reading of the specification, claims and by reference to the accompanying drawings in which:

FIG. 1 is an illustration of one embodiment of the teachings for a substrate fluorescence mask according to the prior art;

FIG. 2 is an illustration of another embodiment of the teachings for a substrate fluorescence mask according to the prior art;

FIG. 3 is an illustration of the teachings herein for a multicolor substrate fluorescence mask;

FIG. 4 is an illustration of one embodiment of a multicolor substrate fluorescence mask;

FIG. 5 is a flowchart outlining one exemplary embodiment of the method for embedding information utilizing a multicolor substrate fluorescence mask; and

FIG. 6 illustrates example embodiments of alternative exemplary distraction patterns.

For the purposes of clarity, the following term definitions are provided:

Color: A color can be uniquely described by three main perceptual attributes: hue, denoting whether the color appears to have an attribute according to one of the common color names, such as red, orange, yellow, green, blue, or purple (or some point on a continuum); colorfulness, which denotes the extent to which hue is apparent; and brightness, which denotes the extent to which an area appears to exhibit light. Light sources used to illuminate objects for viewing are typically characterized by their emission spectrum and to a reduced degree by their color temperature, which is primarily relevant for characterization of sources with a spectrum similar to a black body radiator. See, for instance, Hunt, R.W.G., Measuring Colour, Ellis Horwood, 1991, and Billmeyer and Saltzman, Principles of Color Technology, 3rd Ed. (Roy S. Berns), John Wiley & Sons, 2000.

Colorant: A dye, pigment, ink, or other agent used to impart a color to a material. Colorants, such as most colored toners, impart color by altering the spectral power distribution of the light they receive from the incident illumination through two primary physical phenomenon: absorption and scattering. Color is produced by spectrally selective absorption and scattering of the incident light, while allowing for transmission of the remaining light. For example, cyan, magenta and yellow colorants selectively absorb long, medium, and short wavelengths respectively in the spectral regions. Some colorants, such as most colored toners, impart color via a dye operable in transmissive mode. Other suitable colorants may operate in a reflective mode.

Fluorescence: An optical phenomenon whereby the molecular absorption of a photon triggers the emission of another photon with a longer wavelength. Usually the absorbed photon is in the ultraviolet range, and the emitted light is in the visible range.

Fluorescence Mark: A watermark embedded in the image that has the property of being relatively indecipherable under normal light, and decipherable under ultraviolet light.

Image: An image may be described as an array or pattern of pixels that are mapped in a two-dimensional format. The intensity of the image at each pixel is translated into a numerical value which may be stored as an array that represents the image. An array of numerical values representing an image is referred to as an image plane. Monochromatic or black and white (gray scale) images are represented as a two-dimensional array where the location of a pixel value in the array corresponds to the location of the pixel in the image. Multicolor images are represented by multiple two-dimensional arrays.

Illuminant: A source of incident luminous energy specified by its relative spectral power distribution.

Image plane: A two-dimensional representation of image data. For example, the uppercase letters C, Y, M, K are used to indicate two-dimensional arrays of values representing cyan, magenta, yellow and black components of a polychromatic (multicolor) image. Two-dimensional arrays of values may also be referred to as "planes". For example, the Y plane refers to a two-dimensional array of values that represent the yellow component at every location (pixel) of an image.

Composite Image: An array of values representing an image formed as a composite of plural overlaid (or combined) colorant image planes. Source images may be encoded as described herein and the resulting image planes are combined to form a composite image.

Imaging Device: A device capable of generating, capturing, rendering, or displaying an image; including devices that store, transmit, and process image data. A color imaging device has the capability to utilize color attribute information.

Luminance: A photometric measure describing the amount of light that passes through or is emitted from a particular area, and falls within a given solid angle. Luminance indicates how much luminous power will be perceived by the human eye looking at the surface from a particular angle of view. It is therefore an indicator of how bright a surface will appear.

Security document: A paper or document having a value such as to render it vulnerable to counterfeiting or unauthorized copying attempts.

It is known to utilize fluorescent material inks in combination with ultra-violet light sources for watermarking to ensure document security. See, for example, U.S. Patent No. 3,614,430 to Berler; U.S. Patent No. 4,186,020 to Wachtel; and U.S. Patent No. 5,256,192 to Liu et al.. However, these inks are costly and are often difficult to incorporate into standard electrophotographic or other non-impact printing systems, such as solid ink printers, due to cost, availability or physical/chemical properties.

An alternate approach is to suitably mask the fluorescent properties found in standard paper substrates by the toners applied thereon to render a distinct image that is viewable under ultraviolet light but is not readily visible by an observer under normal light conditions. Examples of this approach are described in US-A-20070264476 ('476) and US-A-20070262579 ('579) to Bala et al. ("Substrate Fluorescence Mask for Embedding Information in Printed Documents") both of which were published after the priority date of the present specification. As described therein, it has been observed that common substrates used in digital printing contain optical brighteners that cause fluorescence. Standard colorants can act as an effective blocker of UV-induced emission. Of particular interest is the yellow colorant, which, is a strong inhibitor of UV-induced emission, and furthermore exhibits very low luminance contrast under normal illumination. This is due to the fact that yellow absorbs in the blue regime of the visible spectrum, and blue does not contribute significantly to perceived luminance.

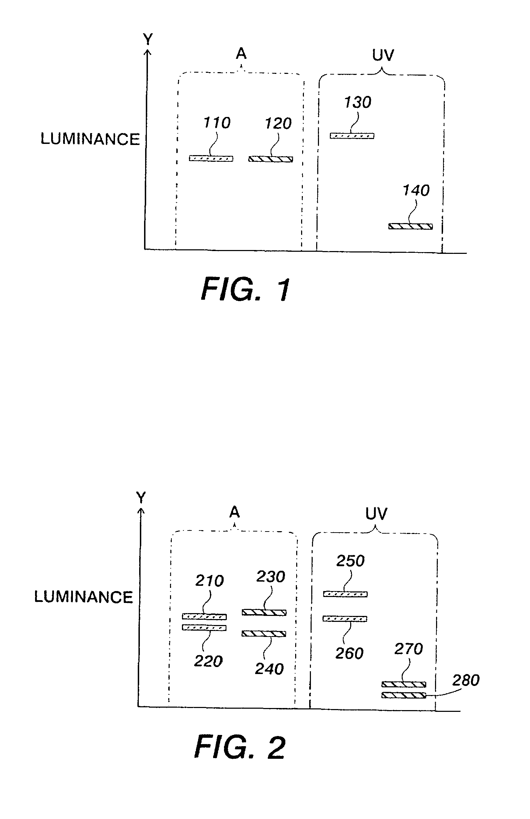

In accordance with the '476 publication, a fluorescent watermark (termed a "UV Mark") is embedded in a printed document by selectively masking substrate fluorescence with standard C, M, Y, K colorants and standard substrates used in digital color printing. A challenge in this approach is to design two colors that match under normal illumination, and yet exhibit significant contrast under UV light. This is conceptually illustrated in Figure 1, where it is assumed, for the simplicity of illustration, that some form of luminance component (labeled Y) is used to describe the color of the patterns. In the standard case, the two colors 110 AND 120 should match under a normal illuminant (for example, illuminant A), but one color 130 would be considerably lighter than the other color 140 under UV illumination.

As described in the '579 publication, distraction patterns also may be utilized to obscure the visibility of the UV Mark under normal light. Distraction patterns may be created from two or more colors with the assumption that the interspersing of the colors will make the information unreadable under illuminant A. This is illustrated in Figure 2, in which the four colors 210, 220, 230, and 240 almost match under illuminant A, but two clear groups form under UV illumination. In this illustration colors 250 and 260 appear brighter than colors 270 and 280 under UV. Distraction patterns may include unstructured random patterns, such as white noise, or structured patterns, such as a checkerboard. A difficulty with this approach is that there may be those situations in which significant contrast conceivably could still exist between the UV Mark and the background under normal illumination, especially since very often even normal light sources (e.g., sunlight) have some UV content and this cannot be carefully controlled or characterized.

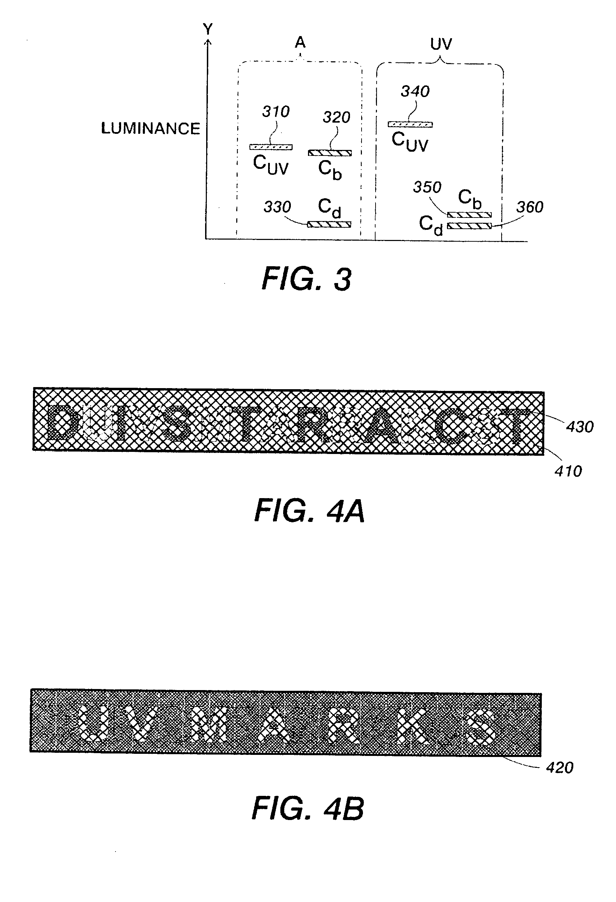

The encryption approach described herein employs a minimum set of three colors in the UV mark: background color C_{b}, UV Mark color Cᵤᵥ, and distraction color C_{d} designed with the following properties. Under normal light, the UV mark color blends into the background, while the distraction text exhibits high contrast against the background and is thus strongly visible. Under UV light, the situation is reversed - the distraction color blends into the background and the UV text exhibits high contrast, becoming highly visible. This is illustrated in Figure 3. As shown in Figure 3, the contrast of the distraction pattern 330 against the background color 320 and the UV Mark color 310 under illuminant A, normal light, is sufficiently significant that any imprecision in the match between the UV Mark and background under illuminant A can be substantially masked by the high contrast noise. Under UV, the situation reverses and the grouping changes, effectively turning the "noise" color into signal. Here the contrast between the distraction pattern 360 and the background color 350 is not significant and the UV color 340 becomes readily visible.

In contrast to the approach illustrated in Figure 2, a minimum of only three colors need to be defined, with effectively less stringent requirements on color matching. Simultaneously, the distraction amplitude under illuminant A is effectively eliminated under UV light, leading to a higher signal-to-noise ratio. An additional advantage to the three-color overlay approach as disclosed herein is that more aggressive distraction patterns may be utilized, since they disappear under UV illumination. The distraction pattern may be chosen to itself convey semantic content. Examples of semantic distraction patterns include text strings or icons. The advantage is that the user is more likely to be drawn towards a semantic distraction pattern than low-level image variations, and is thus less likely to notice and decipher a UV mark under normal light. This enables greater tolerance and robustness in the design of the UV Mark.

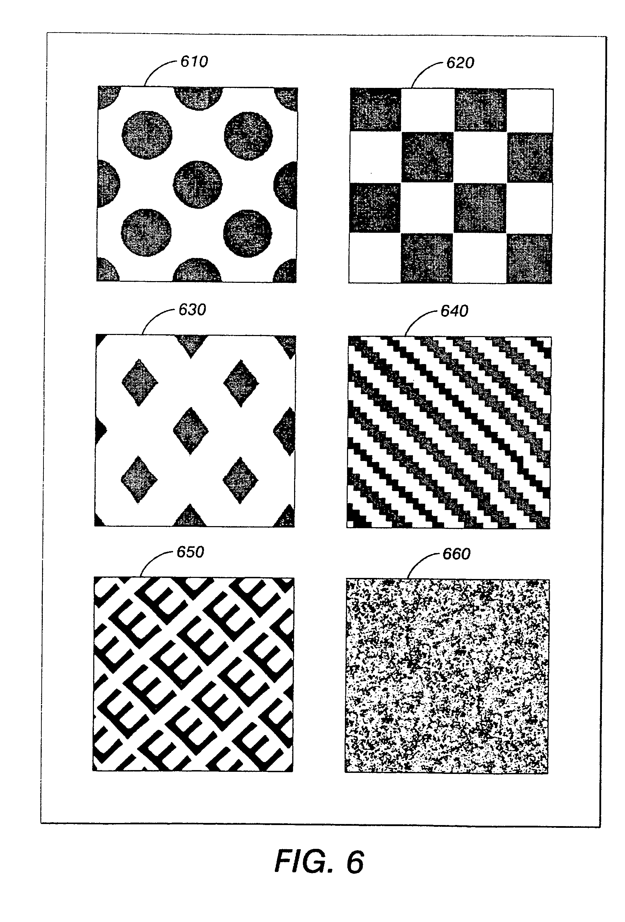

The concept could be generalized so that each of the 3 colors C_{b}, Cᵤᵥ, and C_{d} is replaced by a grouping of colors designed in spatial mosaics as taught in the '579 publication. This would serve to introduce additional distraction noise, thus deterring the decipherability of the UV Mark under normal light. This is illustrated in Figure 6, which shows examples of distracting patterns 610-650 that consist of repeating patterns, letters, or letter-like objects. As will be appreciated by those skilled in the art, other patterns can be derived from those provided in Figure 6. The use of random noise patterns, rather than strictly repeating patterns, is also possible as is depicted by pattern 660.

Referring to Figure 4, there is shown an example embodiment of the substrate fluorescence mask utilizing a multiple color overlay. In this embodiment the background color C_{b} (410) is solid yellow. The UV mark color Cᵤᵥ (420) used to encode the text string "UVMARKS" is a yellow tint chosen to produce low contrast against C_{b} under normal light and high contrast under UV light. The distraction color C_{d} (430) is a gray (C=M=Y or pure K) color designed to produce high contrast against C_{b} under normal light, while blending into C_{b} under UV light. It is used to form a semantic distraction pattern, the text string "DISTRACT" for this embodiment.

The particular methods performed for designing a substrate fluorescence mask comprise steps which are described below with reference to a series of flow charts. The flow charts illustrate an embodiment in which the methods constitute computer programs made up of computer-executable instructions. Describing the methods by reference to a flowchart enables one skilled in the art to develop software programs including such instructions to carry out the methods on computing systems. The language used to write such programs can be procedural, such as Fortran, or object based, such as C++. One skilled in the art will realize that variations or combinations of these steps can be made without departing from the scope of the disclosure herein.

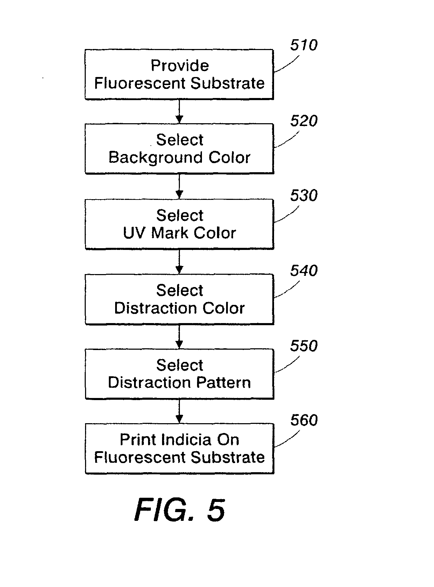

Turning now to Figure 5, a flowchart illustrates the process for creating a UV Mark in accordance with the disclosure herein. At 510 a suitable printing substrate is provided. The substrate may be any white or colored digital printing substrate containing optical brightening agents to enhance the substrate's "whiteness" or "brightness". See, for example, U.S. Patent No. 3,900,608 to Dierkes et al.; U.S. Patent No. 5,371,126 to Strickler; or U.S. Patent No. 6,773,549 to Burkhardt. Paper is often marketed with a numeric indication of its brilliance. UV Marks have been successfully designed for brilliance numbers in the range of 80 and higher. In general, the higher the brilliance indicator, the better the quality of the resulting UV Mark.

The background color C_{b} is selected at 520. In one example embodiment, the method for color selection is structured such that a user may select C_{b}, and the remaining two colors are automatically derived from the C_{b} choice. The constraints applied for the selection of the background color C_{b} are
*Y* ≥ *Threshold* 1
*C + M* ≤ *Threshold* 2
*K*= *0*,
in which Y is yellow, C is cyan, M is magenta, and K is black. The first constraint ensures that there is sufficient yellow in the background to match a given level of K in the distraction text under UV light. The second constraint ensures that the background is light enough to exhibit visually significant contrast against the black (K) text under normal light. For example, the background color in Fig. 4 uses extreme values of Y=100%, C+M =0%. In additional experiments, Threshold1 = 100% and Threshold2 = 70% were used to algorithmically generate a set of 21 random background colors exhibiting a variety of green, yellow, and red hues as well as intermediate hue mixtures. In general the thresholds and the background colors are chosen heuristically based on a priori knowledge of the characteristics of a given printer, colorants and paper substrate.

The UV Mark color is then selected at 530. The UV Mark color Cᵤᵥ should exhibit low contrast against the background color C_{b} under normal light and high contrast under UV light. One approach is to begin with C_{b} and subtract a certain amount of yellow (denoted ΔY) to form Cᵤᵥ. The magnitude of ΔY will determine the trade-off in visibility of the UV Mark under normal vs. UV light. In experiments, ΔY = 25% was determined to yield an appropriate trade-off for the given printer, colorants and paper substrate. This amount was subtracted from C_{b} to create Cᵤᵥ. Alternatively, a more formal optimization technique could be used to adjust all four colorants to achieve a pair C_{b} and Cᵤᵥ that minimizes color difference under normal light, and maximizes the UV luminance differential, or contrast. One exemplary method starts with a chosen background color C_{b}, and searches for the color Cᵤᵥ that minimizes the color difference between Cᵤᵥ and C_{b} under normal light, subject to difference in luminance between Cᵤᵥ and C_{b} under UV being greater than a predetermined threshold.

Alternatively, the optimization problem could be formulated to find the color Cᵤᵥ that maximizes the luminance differential with C_{b} under UV subject to color difference under normal light being less than a predetermined threshold. Either optimization problem requires a color characterization or model for the printer that relates input CMYK to resulting printed color, as measured under both normal and UV light. With these models in place, the problem can be solved with standard optimization techniques such as sequential quadratic programming or gradient-descent methods, as are known in the art.

The distraction color C_{d}, selected at 540, is chosen to be a dark gray or black, since this will strongly stand out against the highly colored background C_{b} under normal light. Additionally, since the distraction pattern is to blend into the background under UV light, the gray level is chosen so that the luminances of C_{d} and C_{b} match under UV light. The luminance match can be achieved via a characterization of the printer's luminance response under UV light. Such a characterization can be derived by measurement-based, model-based, or visual techniques. The distraction color C_{d} can be generated with either pure K, process colorants (C=M=Y), or a combination thereof. Alternatively, the distraction color may be a non-neutral CMYK combination. In another embodiment, one or more of the colors Cᵤᵥ, C_{d}, and C_{b} could themselves be replaced by spatial mosaic patterns comprising multiple colorant combinations, as taught in the '579 publication and discussed above with reference to Figure 6 herein.

The distraction pattern is selected at 550. The three-color system described above in the example embodiment enables the use of a semantic distraction pattern, which can be implemented using a specially designed font (such as a font that interleaves the distraction text with the UV Mark text). Thus a full variable data path is enabled for both UV Mark and distraction pattern. The selected indicia are then printed on the fluorescent substrate by an imaging device at 560.

While the present discussion has been illustrated and described with reference to specific embodiments, further modification and improvements will occur to those skilled in the art. For example, the 3 colors or color groupings could be generated with other special colorants in addition to the standard C, M, Y, K. Examples of such colorants could include low-load colorants (commonly cyan and magenta), orange, green, violet, etc. Additionally, colored media that include OBAs could also be employed. Additionally, "code" as used herein, or "program" as used herein, is any plurality of binary values or any executable, interpreted or compiled code which can be used by a computer or execution device to perform a task. This code or program can be written in any one of several known computer languages. A "computer", as used herein, can mean any device which stores, processes, routes, manipulates, or performs like operation on data.

## Claims

1. A method for creation of a substrate fluorescence mask to be printed by a printing device as an image on a substrate for embedding information in printed documents, wherein said substrate fluorescence mask includes at least one background color (C _{b}), at least one UV mark color (C _{UV}), and at least one distraction color (C_{d}), the method comprising:
providing (510) a substrate containing optical brightening agents;
selecting (520) at least one background color (C_{b}) for the substrate fluorescence mask;
selecting (530) at least one UV mark color (C_{UV}) for the substrate fluorescence mask, wherein the contrast of said UV mark color (C_{UV}) against said at least one background color (C_{b}) under normal illumination using a standard illuminant is less than the contrast of said UV mark color (C_{UV}) against said at least one background color (C_{b}) under UV illumination;
selecting (540) at least one distraction color (C_{d}), wherein the contrast of said distraction color (C_{d}) against said at least one background color (C_{b}) under UV illumination is less than the contrast of said distraction color (C_{d}) against said at least one background color (C_{b}) under normal illumination using a standard illuminant; and
selecting (550) at least one distraction pattern, wherein said at least one distraction pattern is formed from said at least one distraction color (C_{d}).

2. The method according to claim 1, wherein said at least one background color (C_{b}), said at least one UV mark color, and said at least one distraction color (C_{d})are generated from at least one member selected from the group comprising:
CMYK colorants, orange, green, and violet.

3. The method according to claim 2, wherein selecting said at least one background color (C_{b}) with CMYK colorants applied comprises:
applying a first constraint requiring that the yellow component (Y) of said at least one background color (C_{b}) be greater than or equal to a specified first threshold, wherein said first threshold is set to cause said at least one background color (C_{b}) to include sufficient yellow to match a specified level of black (K) or gray in said at least one distraction color under UV illumination;
applying a second constraint requiring that the sum of cyan (C) and magenta (M) components of said at least one background color (C_{b}) is less than or equal to a specified second threshold, wherein said second threshold is set to cause said at least one background color (C_{b}) to be light enough to exhibit visually significant contrast against a black or gray distraction color (C_{d}) under normal illumination using a standard illuminant; and
applying a third constraint which excludes the presence of black in said at least one background color (C_{b}).

4. The method according to any of claims 1 to 3, wherein selecting said at least one UV mark color (Cᵤᵥ) comprises one of:
i) reducing the amount of yellow colorant (Y) in a selected at least one background color (C_{b});
ii) performing optimization to identify a UV mark color (Cᵤᵥ) that minimizes the color difference between said at least one UV mark color (Cᵤᵥ) and said at least one background color (C_{b}) under normal illumination using a standard illuminant, subject to the difference in luminance between said at least one UV mark color (Cᵤᵥ) and said at least one background color (C_{b}) under UV light being greater than a specified threshold; and,
iii) performing optimization to identify a UV mark color (Cᵤᵥ) that maximizes the luminance differential between said at least one UV mark color (Cᵤᵥ) and said at least one background color (C_{b}) under UV illumination, subject to the color difference between said at least one UV mark color (Cᵤᵥ) and said at least one background color (C_{b}) under normal illumination using a standard illuminant being less than a specified threshold.

5. The method according to any of the preceding claims, wherein said distraction pattern comprises a distraction pattern that conveys semantic content such as an intelligible text string.

6. A system for creation of a substrate fluorescence mask to be printed as an image on a substrate for embedding information in printed documents, wherein said substrate fluorescence mask includes at least one background color (C_{b}), at least one UV mark color (Cᵤᵥ), and at least one distraction color (C_{d}), the system comprising:
a digital printing device;
a substrate containing optical brightening agents;
at least one background color (C_{b}) for the substrate fluorescence mask;
at least one UV mark color (Cᵤᵥ) for the substrate fluorescence mask, wherein the contrast of said UV mark color (Cᵤᵥ) against said at least one background color (C_{b}) under normal illumination using a standard illuminant is less than the contrast of said UV mark color (Cᵤᵥ) against said at least one background color (C_{b}) under UV illumination;
at least one distraction color (C_{d}), wherein the contrast of said distraction color (C_{d}) against said at least one background color (C_{b}) under UV illumination is less than the contrast of said distraction color (C_{d}) against said at least one background color (C_{b}) under normal illumination using a standard illuminant; and
at least one distraction pattern, wherein said at least one distraction pattern is formed from said at least one distraction color (C_{d}).

7. A substrate fluorescence mask including at least one background color (C_{b}), at least one UV mark color (Cᵤᵥ), and at least one distraction color (C_{d}), the substrate fluorescence mask comprising:
a substrate containing optical brightening agents;
at least one background color (C_{b}) for the substrate fluorescence mask;
at least one UV mark color (Cᵤᵥ) for the substrate fluorescence mask, wherein the contrast of said UV mark color (Cᵤᵥ) against said at least one background color (C_{b}) under normal illumination using a standard illuminant is less than the contrast of said UV mark color (Cᵤᵥ) against said at least one background color (C_{b}) under UV illumination;
at least one distraction color (C_{d}), wherein the contrast of said distraction color (C_{d}) against said at least one background color (C_{b}) under UV illumination is less than the contrast of said distraction color (C_{d}) against said at least one background color (C_{b}) under normal illumination using a standard illuminant; and
at least one distraction pattern, wherein said at least one distraction pattern is formed from said at least one distraction color (C_{d}).

8. The substrate fluorescence mask according to claim 7, wherein said at least one background color (C_{b}), said at least one UV mark color (Cᵤᵥ), and said at least one distraction color (C_{d}) are generated from at least one member selected from the group comprising: CMYK colorants, , orange, green, and violet.

9. The substrate fluorescence mask according to claim 7 or claim 8, wherein selecting said at least one background color (C_{b}) with CMYK colorants applied comprises:
applying a first constraint requiring that the yellow component (Y) of said at least one background color (C_{b}) be greater than or equal to a specified first threshold, wherein said first threshold is set to cause said at least one background color (C_{b}) to include sufficient yellow to match a specified level of black (K) or gray in said at least one distraction color (C_{d}) under UV illumination;
applying a second constraint requiring that the sum of cyan (C) and magenta (M) components of said at least one background color (C_{b}) is less than or equal to a specified second threshold, wherein said second threshold is set to cause said at least one background color (C_{b}) to be light enough to exhibit visually significant contrast against a black (K) or gray distraction color under normal illumination using a standard illuminant; and
applying a third constraint which excludes the presence of black in said at least one background color (C_{b}).

10. A computer-readable storage medium having computer readable program code embodied in said medium which, when said program code is executed by a computer causes said computer to perform method steps for creation of a substrate fluorescence mask to be printed by a printing device as an image on a substrate for embedding information in printed documents, wherein said substrate fluorescence mask includes at least one background color (C_{b}), at least one UV mark color (Cᵤᵥ), and at least one distraction color (C_{d}), the method comprising:
providing a substrate containing optical brightening agents;
selecting at least one background color (C_{b}) for the substrate fluorescence mask;
selecting at least one UV mark color (Cᵤᵥ) for the substrate fluorescence mask, wherein the contrast of said UV mark color (Cᵤᵥ) against said at least one background color (C_{b}) under normal illumination using a standard illuminant is less than the contrast of said UV marker color (Cᵤᵥ) against said at least one background color (C_{b}) under UV illumination;
selecting at least one distraction color (C_{d}), wherein the contrast of said distraction color against said at least one background color (C_{b}) under UV illumination is less than the contrast of said distraction color (C_{d}) against said at least one background color (C_{b}) under normal illumination using a standard illuminant; and
selecting at least one distraction pattern, wherein said at least one distraction pattern is formed from said at least one distraction color (C_{d}).

## Patentansprüche

1. Verfahren zum Herstellen einer Träger-Fluoreszenzmaske, die mit einer Druckvorrichtung als ein Bild auf einen Träger aufgedruckt wird, um Informationen in gedruckte Dokumente einzubetten, wobei die Träger-Fluoreszenzmaske wenigstens eine Hintergrundfarbe (C_{b}), wenigstens eine UV-Zeichenfarbe (C_{UV}) und wenigstens eine Ablenkungsfarbe (distraction color) (C_{d}) enthält und das Verfahren umfasst:
Bereitstellen (510) eines Trägers, der optische Aufheller enthält;
Auswählen (520) wenigstens einer Hintergrundfarbe (C_{b}) für die Träger-Fluoreszenzmaske;
Auswählen (530) wenigstens einer UV-Zeichenfarbe (C_{UV}) für die Träger-Fluoreszenzmaske, wobei der Kontrast der UV-Zeichenfarbe (C_{UV}) zu wenigstens einer Hintergrundfarbe (C_{b}) bei normaler Beleuchtung unter Verwendung einer Standard-Lichtquelle schwächer ist als der Kontrast der UV-Zeichenfarbe (C_{UV}) zu wenigstens einer Hintergrundfarbe (C_{b}) bei UV-Beleuchtung;
Auswählen (540) wenigstens einer Ablenkungsfarbe (C_{d}), wobei der Kontrast der Ablenkungsfarbe (C_{d}) zu der wenigstens einen Hintergrundfarbe (C_{b}) bei UV-Beleuchtung schwächer ist als der Kontrast der Ablenkungsfarbe (C_{d}) zu der wenigstens einen Hintergrundfarbe (C_{b}) bei normaler Beleuchtung unter Verwendung einer Standard-Lichtquelle; und
Auswählen (550) wenigstens eines Ablenkungsmusters, wobei das wenigstens eine Ablenkungsmuster aus der wenigstens einen Ablenkungsfarbe (C_{d}) ausgebildet wird.

2. Verfahren nach Anspruch 1, wobei die wenigstens eine Hintergrundfarbe (C_{b}), die wenigstens eine UV-Zeichenfarbe (C_{UV}) und die wenigstens eine Ablenkungsfarbe (C_{d}) aus wenigstens einem Element erzeugt wird, das aus der Gruppe ausgewählt wird, die umfasst:
CMYK-Farbstoffe, Orange, Grün und Violett.

3. Verfahren nach Anspruch 2, wobei Auswählen der wenigstens einen Hintergrundfarbe (C_{b}) unter Anwendung von CMYK-Farbstoffen umfasst:
Anwenden einer ersten Einschränkung, die erfordert, dass die Gelb-Komponenten (Y) der wenigstens einen Hintergrundfarbe (C_{b}) über oder auf einem vorgegebenen ersten Schwellenwert liegt, wobei der erste Schwellenwert so festgelegt wird, dass dadurch die wenigstens eine Hintergrundfarbe (C_{b}) ausreichend Gelb enthält, um einem vorgegebenen Grad an Schwarz (K) oder Grau in der wenigstens einen Ablenkungsfarbe (C_{d}) bei UV-Beleuchtung zu entsprechen;
Anwenden einer zweiten Einschränkung, die erfordert, dass die Summe von Cyan (C)- und Magenta (M)-Komponenten der wenigstens einen Hintergrundfarbe (C_{b}) unter oder auf einem vorgegebenen zweiten Schwellenwert liegt, wobei der zweite Schwellenwert so festgelegt wird, dass dadurch die wenigstens eine Hintergrundfarbe (C_{b}) hell genug ist, um bei normaler Beleuchtung unter Verwendung einer Standard-Lichtquelle visuell signifikanten Kontrast zu einer schwarzen oder grauen Ablenkungsfarbe (C_{d}) aufzuweisen; und
Anwenden einer dritten Einschränkung, die das Vorhandensein von Schwarz in der wenigstens einen Hintergrundfarbe (C_{b}) ausschließt.

4. Verfahren nach einem der Ansprüche 1 bis 3, wobei Auswählen der wenigstens einen UV-Zeichenfarbe (C_{UV}) umfasst:
1) Reduzieren der Menge an gelbem Farbstoff (Y) in einer ausgewählten wenigstens einen Hintergrundfarbe (C_{b});
2) Durchführen von Optimierung, um eine UV-Zeichenfarbe (C_{UV}) zu identifizieren, durch die der Farbunterschied zwischen der wenigstens einen UV-Zeichenfarbe (C_{UV}) und der wenigstens einen Hintergrundfarbe (C_{b}) bei normaler Beleuchtung unter Verwendung einer Standard-Lichtquelle minimiert wird, vorausgesetzt, dass der Unterschied der Luminanz zwischen der wenigstens einen UV-Zeichenfarbe (C_{UV}) und der wenigstens einen Hintergrundfarbe (C_{b}) bei UV-Licht über einem vorgegebenen Schwellenwert liegt; und
3) Durchführen von Optimierung, um eine UV-Zeichenfarbe (C_{UV}) zu identifizieren, durch die der Luminanz-Unterschied zwischen der wenigstens einen UV-Zeichenfarbe (C_{UV}) und der wenigstens einen Hintergrundfarbe (C_{b}) bei UV-Beleuchtung maximiert wird, vorausgesetzt, dass der Farbunterschied zwischen der wenigstens einen UV-Zeichenfarbe (C_{UV}) und der wenigstens einen Hintergrundfarbe (C_{b}) bei normaler Beleuchtung unter Verwendung einer Standard-Lichtquelle unter einem vorgegebenen Schwellenwert liegt.

5. Verfahren nach einem der vorangehenden Ansprüche, wobei das Ablenkungsmuster ein Ablenkungsmuster umfasst, das semantischen Inhalt, wie beispielsweise eine verständliche Textfolge, vermittelt.

6. System zum Erzeugen einer Träger-Fluoreszenzmaske, die als ein Bild auf einen Träger aufgedruckt wird, um Informationen in gedruckte Dokumente einzubetten, wobei die Träger-Fluoreszenzmaske wenigstens eine Hintergrundfarbe (C_{b}), wenigstens eine UV-Zeichenfarbe (C_{UV}) und wenigstens eine Ablenkungsfarbe (distraction color) (C_{d}) enthält und das System umfasst:
eine digitale Druckvorrichtung;
einen Träger, der optische Aufheller enthält;
wenigstens eine Hintergrundfarbe (C_{b}) für die Träger-Fluoreszenzmaske;
wenigstens eine UV-Zeichenfarbe (C_{UV}) für die Träger-Fluoreszenzmaske, wobei der Kontrast der UV-Zeichenfarbe (C_{UV}) zu der wenigstens einen Hintergrundfarbe (C_{b}) bei normaler Beleuchtung unter Verwendung einer Standard-Lichtquelle schwächer ist als der Kontrast der UV-Zeichenfarbe (C_{UV}) zu der wenigstens einen Hintergrundfarbe (C_{b}) bei UV-Beleuchtung;
wenigstens eine Ablenkungsfarbe (C_{d}), wobei der Kontrast der Ablenkungsfarbe (C_{d}) zu der wenigstens einen Hintergrundfarbe (C_{b}) bei UV-Beleuchtung schwächer ist als der Kontrast der Ablenkungsfarbe (C_{d}) zu der wenigstens einen Hintergrundfarbe (C_{b}) bei normaler Beleuchtung unter Verwendung einer Standard-Lichtquelle; und
wenigstens ein Ablenkungsmuster, wobei das wenigstens eine Ablenkungsmuster aus der wenigstens einen Ablenkungsfarbe (C_{d}) ausgebildet wird.

7. Träger-Fluoreszenzmaske, die wenigstens eine Hintergrundfarbe (C_{b}), wenigstens eine UV-Zeichenfarbe (C_{UV}) und wenigstens eine Ablenkungsfarbe (distraction color) (C_{d}) enthält, wobei die Träger-Fluoreszenzmaske umfasst:
einen Träger, der optische Aufheller enthält;
wenigstens eine Hintergrundfarbe (C_{b}) für die Träger-Fluoreszenzmaske;
wenigstens eine UV-Zeichenfarbe (C_{UV}) für die Träger-Fluoreszenzmaske, wobei der Kontrast der UV-Zeichenfarbe (C_{UV}) zu der wenigstens einen Hintergrundfarbe (C_{b}) bei normaler Beleuchtung unter Verwendung einer Standard-Lichtquelle schwächer ist als der Kontrast der UV-Zeichenfarbe (C_{UV}) zu der wenigstens einen Hintergrundfarbe (C_{b}) bei UV-Beleuchtung;
wenigstens eine Ablenkungsfarbe (C_{d}), wobei der Kontrast der Ablenkungsfarbe (C_{d}) zu der wenigstens einen Hintergrundfarbe (C_{b}) bei UV-Beleuchtung schwächer ist als der Kontrast der Ablenkungsfarbe (C_{d}) zu der wenigstens einen Hintergrundfarbe (C_{b}) bei normaler Beleuchtung unter Verwendung einer Standard-Lichtquelle; und
wenigstens ein Ablenkungsmuster, wobei das wenigstens eine Ablenkungsmuster aus der wenigstens einen Ablenkungsfarbe (C_{d}) ausgebildet ist.

8. Träger-Fluoreszenzmaske nach Anspruch 7, wobei die wenigstens eine Hintergrundfarbe (C_{b}), die wenigstens eine UV-Zeichenfarbe (C_{UV}) und die wenigstens eine Ablenkungsfarbe (C_{d}) aus wenigstens einem Element erzeugt wird, das aus der Gruppe ausgewählt wird, die umfasst:
CMYK-Farbstoffe, Orange, Grün und Violett.

9. Träger-Fluoreszenzmaske nach Anspruch 7 oder Anspruch 8, wobei Auswählen der wenigstens einen Hintergrundfarbe (C_{b}) unter Anwendung von CMYK-Farbstoffen umfasst:
Anwenden einer ersten Einschränkung, die erfordert, dass die Gelb-Komponenten (Y) der wenigstens einen Hintergrundfarbe (C_{b}) über oder auf einem vorgegebenen ersten Schwellenwert liegt, wobei der erste Schwellenwert so festgelegt wird, dass dadurch die wenigstens eine Hintergrundfarbe (C_{b}) ausreichend Gelb enthält, um einem vorgegebenen Grad an Schwarz (K) oder Grau in der wenigstens einen Ablenkungsfarbe (C_{d}) bei UV-Beleuchtung zu entsprechen;
Anwenden einer zweiten Einschränkung, die erfordert, dass die Summe von Cyan (C)- und Magenta (M)-Komponenten der wenigstens einen Hintergrundfarbe (C_{b}) unter oder auf einem vorgegebenen zweiten Schwellenwert liegt, wobei der zweite Schwellenwert so festgelegt wird, dass dadurch die wenigstens eine Hintergrundfarbe (C_{b}) hell genug ist, um bei normaler Beleuchtung unter Verwendung einer Standard-Lichtquelle visuell signifikanten Kontrast zu einer schwarzen oder grauen Ablenkungsfarbe (C_{d}) aufzuweisen; und
Anwenden einer dritten Einschränkung, die das Vorhandensein von Schwarz in der wenigstens einen Hintergrundfarbe (C_{b}) ausschließt.

10. Computerlesbares Speichermedium, das computerlesbaren Programmcode aufweist, der in dem Medium enthalten ist, und der, wenn der Programmcode durch einen Computer ausgeführt wird, den Computer veranlasst, Verfahrensschritte zum Herstellen einer Träger-Fluoreszenzmaske durchzuführen, die mit einer Druckvorrichtung als ein Bild auf einen Träger aufgedruckt wird, um Informationen in gedruckte Dokumente einzubetten, wobei die Träger-Fluoreszenzmaske wenigstens eine Hintergrundfarbe (C_{b}), wenigstens eine UV-Zeichenfarbe (C_{UV}) und wenigstens eine Ablenkungsfarbe (distraction color) (C_{d}) enthält und das Verfahren umfasst:
Bereitstellen eines Trägers, der optische Aufheller enthält;
Auswählen wenigstens einer Hintergrundfarbe (C_{b}) für die Träger-Fluoreszenzmaske;
Auswählen wenigstens einer UV-Zeichenfarbe (C_{UV}) für die Träger-Fluoreszenzmaske, wobei der Kontrast der UV-Zeichenfarbe (C_{UV}) zu wenigstens einer Hintergrundfarbe (C_{b}) bei normaler Beleuchtung unter Verwendung einer Standard-Lichtquelle schwächer ist als der Kontrast der UV-Zeichenfarbe (C_{UV}) zu wenigstens einer Hintergrundfarbe (C_{b}) bei UV-Beleuchtung;
Auswählen wenigstens einer Ablenkungsfarbe (C_{d}), wobei der Kontrast der Ablenkungsfarbe (C_{d}) zu der wenigstens einen Hintergrundfarbe (C_{b}) bei UV-Beleuchtung schwächer ist als der Kontrast der Ablenkungsfarbe (C_{d}) zu der wenigstens einen Hintergrundfarbe (C_{b}) bei normaler Beleuchtung unter Verwendung einer Standard-Lichtquelle; und
Auswählen wenigstens eines Ablenkungsmusters, wobei das wenigstens eine Ablenkungsmuster aus der wenigstens einen Ablenkungsfarbe (C_{d}) ausgebildet wird.

## Revendications

1. Procédé de création d'un masque fluorescent de substrat à imprimer par un dispositif d'impression en une image sur un substrat pour incorporer des informations dans les documents imprimés, dans lequel ledit masque fluorescent de substrat comprend au moins une couleur de fond (C_{b}), au moins une couleur de repère à UV (Cᵤᵥ), et au moins une couleur de diversion (C_{d}), le procédé comprenant :
la fourniture (510) d'un substrat contenant des azurants optiques ;
la sélection (520) d'au moins une couleur de fond (C_{b}) pour le masque fluorescent de substrat ;
la sélection (530) d'au moins une couleur de repère à UV (Cᵤᵥ) pour le masque fluorescent de substrat, dans lequel le contraste de ladite couleur de repère à UV (Cᵤᵥ) contre ladite au moins une couleur de fond (C_{b}) sous un éclairage normal en utilisant un illuminant standard est inférieur au contraste de ladite couleur de repère à UV (Cᵤᵥ) contre ladite au moins une couleur de fond (C_{b}) sous un éclairage UV ;
la sélection (540) d'au moins une couleur de diversion (C_{d}), dans laquelle le contraste de ladite couleur de diversion (Cd) contre ladite au moins une couleur de fond (C_{b}) sous un éclairage UV est inférieur au contraste de ladite couleur de diversion (C_{d}) contre ladite au moins une couleur de fond (C_{b}) sous un éclairage normal en utilisant un éclairage standard ; et
la sélection (550) d'au moins un motif de diversion, dans lequel ledit au moins un motif de diversion est formé à partir de ladite au moins une couleur de diversion (C_{d}).

2. Procédé selon la revendication 1, dans lequel ladite au moins une couleur de fond (C_{b}), ladite au moins une couleur de repère à UV, et ladite au moins une couleur de diversion (C_{d}) sont générées à partir d'au moins un élément choisi dans le groupe comprenant :
les colorants CMJN, le orange, le vert et le violet.

3. Procédé selon la revendication 2, dans lequel la sélection de ladite au moins une couleur de fond (C_{b}) avec les colorants CMJN appliqués comprend :
l'application d'une première contrainte nécessitant que la composante jaune (J) de ladite au moins une couleur de fond (C_{b}) soit supérieure ou égale à un premier seuil spécifié, dans lequel ledit premier seuil est fixé pour amener ladite au moins une couleur de fond (C_{b}) à inclure suffisamment de jaune pour correspondre à un niveau spécifié de noir (N) ou de gris dans ladite au moins une couleur de diversion sous un éclairage UV ;
l'application d'une deuxième contrainte nécessitant que la somme des composantes cyan (C) et magenta (M) de ladite au moins une couleur de fond (C_{b}) soit inférieure ou égale à un deuxième seuil spécifié, dans lequel ledit deuxième seuil est fixé pour amener ladite au moins une couleur de fond (C_{b}) à être suffisamment claire pour présenter un contraste visuellement significatif contre une couleur de diversion (C_{d}) noire ou grise sous un éclairage normal en utilisant un illuminant standard ; et
l'application d'une troisième contrainte qui exclut la présence de noir dans ladite au moins une couleur de fond (C_{b}).

4. Procédé selon l'une quelconque des revendications 1 à 3, dans lequel la sélection de ladite au moins une couleur de repère à UV (Cᵤᵥ) comprend un élément parme :
i) la réduction de la quantité de colorant jaune (Y) dans une au moins une couleur de fond (C_{b}) choisie ;
ii) la réalisation d'une optimisation pour identifier une couleur de repère à UV (Cᵤᵥ) qui minimise la différence de couleur entre ladite au moins une couleur de repère à UV (Cᵤᵥ) et ladite au moins une couleur de fond (C_{b}) sous un éclairage normal en utilisant un illuminant standard, sujet à la différence de luminance entre ladite au moins une couleur de repère à UV (Cᵤᵥ) et ladite au moins une couleur de fond (C_{b}) sous une lumière UV qui est supérieure à un seuil spécifié ; et,
iii) la réalisation d'une optimisation pour identifier une couleur de repère à UV (Cᵤᵥ) qui maximise le différentiel de luminance entre ladite au moins une couleur de repère à UV (Cᵤᵥ) et ladite au moins une couleur de fond (C_{b}) sous un éclairage UV, sujet à la différence de couleur entre ladite au moins une couleur de repère à UV (Cᵤᵥ) et ladite au moins une couleur de fond (C_{b}) sous un éclairage normal en utilisant un illuminant standard qui est inférieur à un seuil spécifié.

5. Procédé selon l'une quelconque des revendications précédentes, dans lequel ledit motif de diversion comprend un motif de diversion qui transmet un contenu sémantique tel qu'une chaîne de texte intelligible.

6. Système pour la création d'un masque fluorescent de substrat à imprimer en une image sur un substrat pour incorporer des informations dans les documents imprimés, dans lequel ledit masque fluorescent de substrat comprend au moins une couleur de fond (C_{b}), au moins une couleur de repère à UV (Cᵤᵥ), et au moins une couleur de diversion (C_{d}), le système comprenant :
un dispositif d'impression numérique ;
un substrat contenant des azurants optiques ;
au moins une couleur de fond (C_{b}) pour le masque fluorescent de substrat ;
au moins une couleur de repère à UV (Cᵤᵥ) pour le masque fluorescent de substrat, dans lequel le contraste de ladite couleur de repère à UV (Cᵤᵥ) contre ladite au moins une couleur de fond (C_{b}) sous un éclairage normal en utilisant un illuminant standard est inférieur au contraste de ladite couleur de repère à UV (Cᵤᵥ) contre ladite au moins une couleur de fond (C_{b}) sous un éclairage UV ;
au moins une couleur de diversion (C_{d}), dans laquelle le contraste de ladite couleur de diversion (C_{d}) contre ladite au moins une couleur de fond (C_{b}) sous un éclairage UV est inférieur au contraste de ladite couleur de diversion (C_{d}) contre ladite au moins un couleur de fond (C_{b}) sous un éclairage normal en utilisant un illuminant standard ; et
au moins un motif de diversion, dans lequel ledit au moins un motif de diversion est formé à partir de ladite au moins une couleur de diversion (C_{d}).

7. Masque fluorescent de substrat comprenant au moins une couleur de fond (C_{b}), au moins une couleur de repère à UV (Cᵤᵥ), et au moins une couleur de diversion (C_{d}), le masque fluorescent de substrat comprenant :
un substrat contenant des azurants optiques ;
au moins une couleur de fond (C_{b}) pour le masque fluorescent de substrat ;
au moins une couleur de repère à UV (Cᵤᵥ) pour le masque fluorescent de substrat, dans lequel le contraste de ladite couleur de repère à UV (Cᵤᵥ) contre ladite au moins une couleur de fond (C_{b}) sous un éclairage normal en utilisant un illuminant standard est inférieur au contraste de ladite couleur de repère à UV (Cᵤᵥ) contre ladite au moins une couleur de fond (C_{b}) sous un éclairage UV ;
au moins une couleur de diversion (C_{d}), dans laquelle le contraste de ladite couleur de diversion (C_{d}) contre ladite au moins une couleur de fond (C_{b}) sous un éclairage UV est inférieur au contraste de ladite couleur de diversion (C_{d}) contre ladite au moins une couleur de fond (C_{b}) sous un éclairage normal en utilisant un illuminant standard ; et
au moins un motif de diversion, dans lequel ledit au moins un motif de diversion est formé à partir de ladite au moins une couleur de diversion (C_{d}).

8. Masque fluorescent de substrat selon la revendication 7, dans lequel ladite au moins une couleur de fond (C_{b}), ladite au moins une couleur de repère à UV (Cᵤᵥ), et ladite au moins une couleur de diversion (C_{d}) sont générées à partir d'au moins un élément choisi dans le groupe comprenant : les colorants CMJN, le orange, le vert et le violet.

9. Masque fluorescent de substrat selon la revendication 7 ou la revendication 8, dans lequel la sélection de ladite au moins une couleur de fond (C_{b}) avec les colorants CMJN appliqués comprend :
l'application d'une première contrainte nécessitant que la composante jaune (J) de ladite au moins une couleur de fond (C_{b}) soit supérieure ou égale à un premier seuil spécifié, dans lequel ledit premier seuil est fixé pour amener ladite au moins une couleur de fond (C_{b}) à inclure suffisamment de jaune pour correspondre à un niveau spécifié de noir (N) ou de gris dans ladite au moins une couleur de diversion (C_{d}) sous un éclairage UV ;
l'application d'une deuxième contrainte nécessitant que la somme des composantes cyan (C) et magenta (M) de ladite au moins une couleur de fond (C_{b}) soit inférieure ou égale à un deuxième seuil spécifié, dans lequel ledit deuxième seuil est fixé pour amener ladite au moins une couleur de fond (C_{b}) à être suffisamment claire pour présenter un contraste visuellement significatif contre une couleur de diversion noire (N) ou grise sous un éclairage normal en utilisant un illuminant standard ; et
l'application d'une troisième contrainte qui exclut la présence de noir dans ladite au moins une couleur de fond (C_{b}) -

10. Support de stockage lisible par ordinateur ayant un code de programme lisible par ordinateur incorporé dans ledit support qui, lorsque ledit code de programme est exécuté par un ordinateur amène ledit ordinateur à exécuter les étapes du procédé pour la création d'un masque fluorescent de substrat à imprimer par un dispositif d'impression en une image sur un substrate pour incorporer des informations dans les documents imprimés, dans lequel ledit masque fluorescent de substrat comprend au moins une couleur de fond (C_{b}), au moins couleur de repère à UV (Cᵤᵥ), et au moins une couleur de diversion (C_{d}), le procédé comprenant :
la fourniture d'un substrat contenant des azurants optiques ;
la sélection d'au moins une couleur de fond (C_{b}) pour le masque fluorescent de substrat ;
la sélection d'au moins une couleur de repère à UV (Cᵤᵥ) pour le masque fluorescent de substrat, dans laquelle le contraste de ladite couleur de repère à UV (Cᵤᵥ) contre ladite au moins une couleur de fond (C_{b}) sous un éclairage normal en utilisant un illuminant standard est inférieur au contraste de ladite couleur de repère à UV (Cᵤᵥ) contre ladite au moins une couleur de fond (C_{b}) sous un éclairage UV ;
la sélection d'au moins une couleur de diversion (C_{d}), dans laquelle le contraste de ladite couleur de diversion contre ladite au moins une couleur de fond (C_{b}) sous un éclairage UV est inférieur au contraste de ladite couleur de diversion (C_{d}) contre ladite au moins une couleur de fond (C_{b}) sous un éclairage normal en utilisant un éclairage standard ; et
la sélection d'au moins un motif de diversion, dans lequel ledit au moins un motif de diversion est formé à partir de ladite au moins une couleur de diversion (C_{d}).
